Europäisches Patentamt

European Patent Office

Office européen des brevets

(19)

(11) Publication number: **0 185 812**
A1

(12) **EUROPEAN PATENT APPLICATION**

(21) Application number: **84308952.5**

(22) Date of filing: **20.12.84**

(51) Int. Cl.⁴: **C 01 B 33/20**
**C 01 G 23/053, C 10 G 11/05**
**B 01 J 21/16**

(43) Date of publication of application:
**02.07.86 Bulletin 86/27**

(84) Designated Contracting States:
**DE FR GB IT NL**

(71) Applicant: **Exxon Research and Engineering Company**
**P.O.Box 390 180 Park Avenue**
**Florham Park New Jersey 07932(US)**

(72) Inventor: **Wheelock, Kenneth Steven**
**938 Forge Avenue**
**Baton Rouge Louisiana 70808(US)**

(74) Representative: **Somers, Harold Arnold et al,**
**ESSO Engineering (Europe) Ltd. Patents & Licences Apex**
**Tower High Street**
**New Malden Surrey KT3 4DJ(GB)**

(54) **Thermally stable mixed oxide gels.**

(57) A process for co-gelling a smectite with an inorganic metal oxide to produce a co-gel of high surface area which has good retention of surface area at high temperatures. Exemplary of inorganic oxide gels suitable for the practice of this invention are the Group IV-B metal oxides. A crystalline aluminosilicate zeolite can be composited with this material to supply an acidic function. The use of such co-gel compositions as hydrocarbon conversion catalysts is also described and claimed.

EP 0 185 812 A1

# FIELD OF THE INVENTION

This invention relates to thermally stable, high surface area inorganic oxide gels, their preparation and use as hydrocarbon conversion catalysts. In particular, it relates to the thermal stabilization and formation of mixed titanium oxide gels, or co-gels.

# BACKGROUND OF THE INVENTION AND PRIOR ART

Inorganic oxide gels have been known and used for many years for various purposes, e.g., as adsorbents, catalyst supports, and catalysts. Few of these gels, in the relative sense, however, have been used as catalyst supports because only a handful have sufficient surface area and adequate pore volume, particularly at present-day process conditions. Thus alumina ($Al_2O_3$), silica ($SiO_2$), silica-alumina ($SiO_2$-$Al_2O_3$), and crystalline silica-alumina ($SiO_2$-$Al_2O_3$) such as the zeolites, represent the preponderance of the inorganic oxide gels which have been commercially used as catalyst supports, or catalysts in the petroleum, chemical and related industries. These inorganic oxide gels, which are the exceptions among the inorganic oxide gels, can be prepared in forms which have high surface area and adequate pore volume, and they are stable in most environments at high temperatures. Most other inorganic oxide gels, even if they can be prepared in form having adequate high surface area and pore volume, are not stable at high temperatures. For example, titanium oxide ($TiO_2$) can be prepared in high surface area form, but at normal hydrocarbon processing temperatures, i.e., about 750°F to about 930°F, and higher, titanium oxide loses its surface area. Con- sequentially, titanium oxide is unsuitable as a catalyst carrier or catalyst at normal hydrocarbon processing conditions.

The preparation of titanium oxide gels is disclosed, e.g., in U.S. 2,682,242; U.S. 2,553,402; U.S. 2,584,286; and U.S. 3,092,457. Particular reference is made to this latter reference, i.e., U.S. 3,092,457 which discloses the preparation of a titania gel of good purity with reasonably high surface area. In accordance with the teaching of this patent, titanium isopropoxide was acetolyzed with glacial acetic acid, and the resulting solution then hydrolyzed with water to form a clear sol which gelled overnight. The hydrolyzed gel was then dried, calcined and the gel ground to a small particle size to provide particles of surface area ranging from 75 to 125 $m^2/g$.

Certain classes of expandable clay minerals, or smectites have been used as adsorbents, but very little has been reported in the literature regarding the use of these materials as catalysts. The adsorption of aromatics such as benzene and phenol from aqueous solution on smectites such as montmorillionite has been reported but these materials also lack thermal stability. Most of the literature in the last few years has dealt mainly with the preparation and physical properties of these materials. However, two recent publications by J. Shabtai et al, viz. J. Shabtai, R. Lazar & A. Obead - Tokyo Catalysis Congress 1980 Preprints, and J. Shabtai, R. Lazar & N. Frydman - J. Chem. Soc. 1977 pg. 660, do disclose the catalytic activity of montmorillionites in cracking and esterification reactions. A hydrogenation catalyst is reported by T. Pinnavaia using hectorite. Reference is made to W. Quayle & T. J. Pinnavaia, Inorg. Chem. 18, 10, 2840, 1979. Stable pillared interlayered clay compositions which possess considerable micropore volume and have useful adsorbent and catalytic properties are prepared, as described in U.S. 4,176,090 by reacting smectite type clays with polymeric cationic hydroxy metal complexes of metals such as aluminum, zirconium, and/or titanium.  The use of smectites as catalysts, however, is quite limited due to their low surface area and their insufficient thermal stability in high-temperature processes.

It is accordingly a primary objective of the present invention to obviate these and other prior art deficiencies and, in particular, to provide the art with improved oxide catalyst supports or catalysts having improved surface area, particularly titania oxide catalyst supports or titania oxide catalysts which significantly retain their surface area at relatively high temperatures and methods for making such improved oxide catalyst supports or catalysts as well as their use in hydrocarbon conversion processes.

A specific object is to provide a new and improved process for the preparation of a titanium oxide co-gel with relatively high surface area which can be thermally activated at relatively high temperatures without significant loss of surface area, the titanium oxide co-gel being suitable as a catalyst support or catalyst for use in high temperature hydrocarbon conversion reactions.

These objects and others are achieved in accordance with the present invention embodying a process for co-gelling a smectite with a Group IV-B metal oxide of the Periodic Table of the Elements (E. H. Sargent & Co., Copyright 1962 Dyna-Slide Co.), e.g., titanium oxide, zirconium oxide, hafnium oxide, and the like; and other metal oxides such as an oxide of thorium, uranium, silicon, aluminum, and the like; particularly an inorganic metal oxide which is unstable with respect to retaining a high surface area, to produce a co-gel of high surface area which has good retention of surface area at high temperatures. Suitable smectites for the practice of this invention are hectorite, chlorite, montmorillionite, beidellite, or admixtures thereof.

In a preferred embodiment, a titanium dioxide gel is stabilized against thermal desurfacing by co-gelling said titanium dioxide gel with a smectite. The resultant co-gel is one having a surface area higher than the original titanium oxide gel, or smectite, and the co-gel has good surface area retention at high temperatures such as is required in processing hydrocarbons. A titania gel is first prepared by the acetolysis of an organo-, or hydrocarbyl titanium compound, or salt, by a conventional method as disclosed in U.S. 3,092,457, supra, herewith incorporated by reference. An organo-, or hydrocarbyl titanium compound, suitably an organic ester of titanic acid, e.g., tetraisopropyl titanate, is reacted with glacial acetic acid in solution, suitably e.g., an alcohol/water solution, and reaction continued until acetolysis is complete. To this solution, after completion of acetolysis, is then added the smectite gel, and water, suitably as an aqueous solution of the smectite gel, to hydrolyze the reaction product resultant from the acetolysis. On setting, a co-gel of the titanium oxide gel and smectite is formed. The co-gel is separated from the solution, dried and calcined. The composition which is produced possesses a greater surface area than either of its components as inorganic oxides, and has a greater thermal stability toward loss of surface area. The resultant composition is useful for effecting catalytic conversions either alone or when supported on a carrier, and with or without the additional presence of other catalytically active components therewith or dispersed thereon as supported metals.

The invention will be more fully understood by reference to the following examples, and demonstrations, which illustrate its more salient features. All terms are given in terms of weight except as otherwise specified.

EXAMPLES

(I) In accordance with the teachings of U.S. 3,092,457, supra, 274.5 g. of titanium isopropoxide was acetolyzed with 250 cc of glacial acetic acid. Instead of hydrolyzing with water as taught in the U.S. patent, 80.0 g. of Bentonite (Curtin technical grade) was dispersed in 500 cc deionized water to which 300 g. of $H_2O$ (ice) was added. When the ice was melted, the Bentonite gel was added to the titanium containing solution with a high rate of stirring to facilitate co-gel formation. An additional 1000 cc of water was added to the gel to facilitate stirring.

This procedure was repeated reversing the order of addition, that is instead of adding the water to the titanium oxide precursor, the titanium oxide precursor was added to the aqueous gel. This procedure is referred to as reverse addition whereas the former is referred to as forward addition.

For purposes of comparison, a $TiO_2$ was prepared by a conventional method as also disclosed in U.S. 3,092,457.

All of the gels were calcined for at least 4 hours at 400°C to remove water and to establish the gel structure. In addition, the Bentonite was also calcined for 4 hours at 400°C for purposes of comparison. Samples of all the materials so prepared were then calcined for an additional 4 hours at various temperatures ranging from 400-550°C. The surface areas of the materials calcined at various temperatures were determined by the B.E.T. method, and are presented in Table I.

Table I

Gel Surface Areas (B.E.T. $m^2/g$)

| Calcination Temperatures, °C | | | | Gel | |
| | | | | Bentonite/ $TiO_2$ (forward addition) | Bentonite/ $TiO_2$ (reverse addition) |
| 1st 4 Hrs | 2nd 4 Hrs | Bentonite | $TiO_2$ | | |
| 400 | -- | 43.1 | 97.7 | 202.6 | 185.7 |
| 400 | 400 | 45.2 | 97.9 | 204.0 | 191.6 |
| 400 | 450 | 40.6 | 85.0 | 215.8 | 179.3 |
| 400 | 500 | 40.5 | 75.6 | 204.3 | 188.8 |
| 400 | 550 | 44.5 | 62.3 | 210.1 | 164.1 |

The data in Table I clearly show that for the Bentonite-$TiO_2$ gels, a higher surface area results from the co-gel than can be expected from the surface areas of the components, and that the surface area of the co-gel is much more stable with respect to thermal desurfacing than the parent $TiO_2$ gel. In addition, the data also show that forward addition is preferred to reverse addition in terms of creating more surface area in the gel, although both techniques improve the thermal stability. For the case of forward addition, there is no loss of surface area with increasing calcination temperature. For the case of reverse addition, the surface area loss on calcination is much less than would be expected on the basis of simple ratios. Reference is made to Table II.

### Table II

Expected Surface Areas of Go-gels (B.E.T. $m^2/g$)

|  |  | | Gel | | | |
|  |  |  | Bentonite/$TiO_2$ (forward addition) | | Bentonite/$TiO_2$ (reverse addition) | |
| Calcination Temp., $^oC$ | | $TiO_2$ | | | | |
| 1st 4 Hrs | 2nd 4 Hrs | Actual | Actual | Expected | Actual | Expected |
| 400 | 400 | 97.9 | 204.0 | -- | 191.6 | -- |
| 400 | 450 | 85.0 | 215.8 | 177.1 | 179.3 | 166.4 |
| 400 | 500 | 75.6 | 204.3 | 157.5 | 188.8 | 148.0 |
| 400 | 550 | 62.3 | 210.1 | 129.8 | 164.1 | 121.9 |

A simple physical mixture of Bentonite and $TiO_2$ gel gives surface areas varying between the limits set by the pure or unmixed components. The quantities used in the preparation of the two Bentonite/$TiO_2$ co-gels would give weights corresponding to a physical mixture of 80.0 g. Bentonite and 80 g. $TiO_2$. Using surface areas of 45.2 $m^2/g$ for the Bentonite and 97.9 $m^2/g$ for the $TiO_2$ gel and the weight ratio of the mixture used in the preparations, i.e.,

$$\frac{80\ (45.2)\ +\ 80(87.9)}{80\ +\ 80} = 71.55$$

a surface area of 71.55 $m^2/g$ would be expected for the co-gel. Instead, depending on the order of addition, surface areas of 204.0 and 191.6 $m^2/g$ were obtained at the same calcination conditions. Reference is made to Table 3.

Table III

Surface Areas of Physical Mixtures vs. Co-Gels (B.E.T. $m^2/g$)

| Calcination Temperature, $^{o}$C | | Bentonite | $TiO_2$ | Gel | | | |
|---|---|---|---|---|---|---|---|
| | | | | Bentonite/$TiO_2$ (forward addition) | | Bentonite/$TiO_2$ (reverse addition) | |
| 1st 4 Hrs. | 2nd 4 Hrs. | | | Co-Gel | Mixture | Co-Gel | Mixture |
| 400 | 400 | 45.2 | 97.9 | 204.0 | 71.6 | 191.6 | 71.6 |
| 400 | 450 | 40.6 | 85.0 | 215.8 | 62.8 | 179.3 | 62.8 |
| 400 | 500 | 40.5 | 75.6 | 204.3 | 58.05 | 188.8 | 58.05 |
| 400 | 550 | 44.5 | 62.3 | 210.1 | 53.4 | 164.1 | 53.4 |

The co-gels thus possess more than twice the surface area of that to be expected on the basis of simple physical mixtures.

The following data show that the titanium dioxide-bentonite co-gel compositions possess catalytic cracking activity, to wit:

(II)   8.70 gms of titanium dioxide-bentonite co-gel 1:1 by weight which had been calcined for four hours at 400°C and recalcined for four hours at 550°C was weighed out.  Ceric ammonium nitrate in an amount of 0.69 gms was weighed out and dissolved in 5 cc of deionized water.  This solution was added to the co-gel by the method of incipient wetness.  The preparation was dried in vacuo at 86°C for three hours, subsequently calcined at 400°C for two and one-half hours, and the catalyst then tested for catalytic cracking activity in a micro-activity test (MAT) essentially similar to ASTM D3907-80.  Conversion obtained was 35.1 volume percent, and the hydrogen yield was 0.8878 weight percent based on feed.

(III)   To 50.06 gms of the co-gel described in II was added 18.33 cc of deionized water solution which contained 0.83 gm of ammonium hydrofluoride, $NH_4Hf_2$, by the method of incipient wetness.  After drying, the catalyst was calcined at 500°C for five hours.  This catalyst was also given a micro-activity test for catalytic cracking activity.  Conversion obtained was 38.2 volume percent and the hydrogen yield was 0.5342 weight percent on feed.

(IV)   The acidic character of the co-gels of this invention can be increased by compositing an acidic crystalline aluminosilicate zeolite, or more than one crystalline aluminosilicate zeolite with said co-gel. Suitably, such a composite can contain up to about 50 percent of said crystalline aluminosilicate zeolite, or crystalline aluminosilicate zeolites, and preferably contains from about 2 percent to about 25 percent, or more preferably from about 3 percent to about 10 percent of a crystalline aluminosilicate zeolite, based on the weight of the total composition. A catalytically active metal, or metals, can be deposited on either the crystalline aluminosilicate zeolite composite, or the co-gel component, or both. The composite catalysts can also be constituted of the co-gel and zeolite components, and if desirable, a binding component, or components, and a metal or metals and additional components. Such composites are useful as catalysts in petroleum and petrochemical processing.

Composite catalysts containing USY zeolite at both 5 wt. % and 10 wt. % levels, respectively, were made from the thermally stable titanium dioxide bentonite co-gel and USY zeolite. The zeolite was dispersed in aqueous bentonite gel used to hydrolyze the acetolyzed titanium alkoxide. The aqueous bentonite gel was alkalized with aqueous ammonia solution to provide a buffered pH during co-gel synthesis to protect the zeolite from the hydrolytic effects of the acetic acid used to acetolyze the titanium alkoxide.

These catalysts were each charged to a reactor and two separate runs made by passing a gas oil feed over each in standard MAT tests. (MAT is a micro-activity test. See Oil and Gas Journal, 1966, Vol. 64, pages 7, 84, 85 and Vol. 2, 1971, pages 60-68.) The results are given in Table IV.

TABLE IV

|                                    | 5 Wt. % USY | 10 Wt. % USY |
|------------------------------------|-------------|--------------|
| MAT, Conversion %                  | 59.9        | 68.7         |
| Hydrogen Yield, Wt. %              | 0.5140      | 0.5032       |
| Carbon Yield, Wt.%                 | 6.8197      | 4.6564       |
| Surface Area, BET                  | 144.7       | 180.9        |
| Pore Volume                        | 0.286       | 0.357        |
| Unit Cell Size of USY in Composite | 24.55       | 24.54        |

CLAIMS:

1. As a composition of matter, a high surface area co-gel characterized by comprising a smectite and an oxide selected from the group consisting of titanium oxide, zirconium oxide, hafnium oxide, thorium oxide, uranium oxide, silicon oxide, and aluminum oxide.

2. A composition of matter according to claim 1 further characterized by additionally comprising a crystalline aluminosilicate zeolite.

3. A composition of matter according to claim 1 or claim 2 further characterized in that the smectite is hectorite, chlorite, montmorillionite, beidillite, or an admixture thereof.

4. A composition of matter according to any one of claims 1-3 further characterized in that the co-gel comprises a smectite, titanium oxide, and a crystalline aluminosilicate zeolite.

5. A process for the preparation of an oxide co-gel of any one of claims 1-4 characterized by co-gelling said smectite with said oxide of a metal in Group IV-B of the Periodic Table of the Elements.

6. A process according to claim 5 further characterized in that a titanium oxide gel is prepared by the acetolysis of a hydrocarbyl titanium compound in solution, to which water and the smectite as a gel are added to hydrolyze the reaction product and form a titanium oxide co-gel.

7. A process for the conversion of a hydrocarbon feed which comprises contacting said feed at reaction conditions with a catalyst comprising a high surface area co-gel of any one of claims 1-4.

8. A composition of matter of a high surface area co-gel of a smectite and an oxide of a Group IV-B metal of the Periodic Table of the Elements substantially as herein before described with particular reference to the Examples.

9. A process for preparing the compositions of matter of any of claims 1-4 substantially as herein before described with particular reference to the Examples.

10. A process for the conversion of a hydrocarbon feed in the presence of a catalyst comprising a composition of matter of any one of claims 1-4 substantially as herein before described with particular reference to the Examples.

## DOCUMENTS CONSIDERED TO BE RELEVANT

| Category | Citation of document with indication. where appropriate, of relevant passages | Relevant to claim | CLASSIFICATION OF THE APPLICATION (Int Cl.4) |
|---|---|---|---|
| A | GB-A-2 011 366 (UNITED KINGDOM ATOMIC ENERGY AUTHORITY) * Example 1 * | | C 01 B 33/20 C 01 G 23/053 C 10 G 11/05 B 01 J 21/16 |
| A | GB-A-1 537 766 (NL INDUSTRIES INC.) * Example 1 * | | |
| A,D | US-A-4 176 090 (VAUGHAN et al.) | | |
| A | US-A-4 216 188 (SHABRIA et al.) | | |
| A | EP-A-0 032 298 (MOBIL OIL CORP.) | | |
| A | US-A-4 283 309 (GLADROW) * Claims 1,2,3,4,9,10 * | | TECHNICAL FIELDS SEARCHED (Int Cl.4) |
| A | US-A-4 333 821 (HOSHENG TU) | | C 01 B 33/00 C 01 G 23/00 C 10 G 11/05 B 01 J 21/16 |
| A,D | US-A-3 092 457 (SPRAGUE) | | |

The present search report has been drawn up for all claims

| Place of search BERLIN | Date of completion of the search 30-07-1985 | Examiner CLEMENT J.P. |
|---|---|---|